(19) Europäisches Patentamt
European Patent Office
Office européen des brevets

(11) **EP 4 568 130 A1**

(12) **EUROPEAN PATENT APPLICATION**

(43) Date of publication:
**11.06.2025 Bulletin 2025/24**

(21) Application number: **24215299.9**

(22) Date of filing: **26.11.2024**

(51) International Patent Classification (IPC):
*H04B 7/0456* (2017.01)

(52) Cooperative Patent Classification (CPC):
**H04B 7/0486; H04B 7/0456; H04B 7/0626;
H04B 7/0639**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.12.2023 FI 20236351**

(71) Applicant: **Nokia Solutions and Networks Oy
02610 Espoo (FI)**

(72) Inventor: **QIU, Shuang
Stuttgart (DE)**

(74) Representative: **Nokia EPO representatives
Nokia Technologies Oy
Karakaari 7
02610 Espoo (FI)**

(54) **PMI-AIDED LINEAR PRECODING FOR RANK-DEFICIENT USERS IN MASSIVE MIMO SYSTEMS**

(57) Example embodiments provide a precoding design for rank-deficient scenarios. A network device (500) is configured to receive, from a user device, a sounding reference signal, SRS; perform a channel estimation based on the received SRS signal, wherein at least one channel vector is discarded based on an optimum rank for downlink transmission being lower than a number of ports of the user device; transmit, to the user device, a beamformed channel state information reference signal, CSI-RS; receive, from the user device, a precoding matrix indicator, PMI, calculated based on the beamformed CSI-RS; calculate channel state information, CSI, based on the PMI and the beamforming of the CSI-RS; and determine a linear precoding matrix based on combined information from the channel estimation and the CSI such that the one or more discarded channel vectors are compensated by the PMI. An apparatus, a method (600), and computer program are disclosed.

FIG. 4

**Description**

**TECHNICAL FIELD**

The present application generally relates to information technology. Some example embodiments of the present application relate to precoding matrix indicator (PMI) aided linear precoding for rank-deficient users in massive multiple input multiple output (MIMO) systems.

**BACKGROUND**

In MIMO systems, multiple antennas are used for both transmitting and receiving data. Precoding is a technique employed in MIMO transmission to improve performance of a communication link by shaping the transmitted signal based on channel conditions and user requirements. It would be beneficial to improve robustness of precoding under different scenarios.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may enable a precoding technique with reduced computational complexity for rank-deficient scenarios, wherein precoding is designed based on combined channel state information obtained with different methods. This may be achieved by the features of the independent claims. Further implementation forms are provided in the dependent claims, the description, and the drawings.

According to a first aspect, a network device may comprise at least one processor; and at least one memory including instructions which, when executed by the at least one processor, cause the network device at least to receive, from a user device, a sounding reference signal, SRS; perform a channel estimation based on the received SRS signal, wherein at least one SRS-based channel vector is discarded based on an optimum rank for downlink transmission being lower than a number of ports of the user device; transmit, to the user device, a beamformed channel state information reference signal, CSI-RS; receive, from the user device, a precoding matrix indicator, PMI, calculated based on the beamformed CSI-RS; calculate channel state information, CSI, based on the PMI and beamforming of the CSI-RS; and determine a linear precoding matrix based on combined information from the channel estimation and the CSI, wherein the information from the PMI-based CSI is used to compensate for the one or more discarded SRS-based channel vectors of the channel estimation.

According to an example embodiment of the first aspect, the at least one memory further comprises instructions which, when executed by the at least one processor, cause the network device to construct an optimization problem of minimizing a summation of a mean square error based on the channel estimation and an orthogonal projection from the precoding matrix onto the null space of the CSI; and solve the optimization problem to obtain the precoding matrix.

According to an example embodiment of the first aspect, an orthogonal projector for the orthogonal projection is determined based on the CSI.

According to an example embodiment of the first aspect, the optimization problem is solved by a Lagrangian function.

According to an example embodiment of the first aspect, the at least one memory comprises instructions which, when executed by the at least one processor, cause the network device to derive a closed-form expression of the precoding matrix by taking a gradient of the Lagrangian function with respect to the precoding matrix.

According to an example embodiment of the first aspect, the at least one memory further comprises instructions which, when executed by the at least one processor, cause the network device to perform normalization of at least one of the SRS channel estimate or a Lagrangian multiplier of the Lagrangian function.

According to an example embodiment of the first aspect, the normalization is performed with a Frobenius norm.

According to an example embodiment of the first aspect, the at least one memory comprises instructions which, when executed by the at least one processor, cause the network device to update the precoding matrix in response to at least one of an updated PMI or updated channel estimation.

According to a second aspect, a method may comprise receiving, from a user device, a sounding reference signal, SRS; performing a channel estimation based on the received SRS signal, wherein at least one SRS-based channel vector is discarded based on an optimum rank for downlink transmission being lower than a number of ports of the user device; transmitting, to the user device, a beamformed channel state information reference signal, CSI-RS; receiving, from the user device, a precoding matrix indicator, PMI, calculated based on the beamformed CSI-RS; calculating channel state information, CSI, based on the PMI and beamforming of the CSI-RS; and determining a linear precoding matrix based on combined information from the channel estimation and the CSI, wherein the information from the PMI-based CSI is used to compensate for the one or more discarded SRS-based channel vectors of the channel estimation. The method may be performed by a computing device, such as a network device.

According to an example embodiment of the second aspect, the method may comprise constructing an optimization problem of minimizing a summation of a mean square error based on the channel estimation and an orthogonal projection from the precoding matrix onto the null space of the CSI; and solving the optimization problem to obtain the precoding matrix.

According to an example embodiment of the second aspect, an orthogonal projector for the orthogonal projection is determined based on the CSI.

According to an example embodiment of the second aspect, the optimization problem is solved by a Lagrangian function.

According to an example embodiment of the second aspect, the method may comprise deriving a closed-form expression of the precoding matrix by taking a gradient of the Lagrangian function with respect to the precoding matrix.

According to an example embodiment of the second aspect, the method may comprise performing normalization of at least one of the channel estimate or a Lagrangian multiplier of the Lagrangian function.

According to an example embodiment of the second aspect, the normalization is performed with a Frobenius norm.

According to an example embodiment of the second aspect, the method comprises updating the precoding matrix in response to at least one of an updated PMI or updated channel estimation.

According to a third aspect, a computer program may be configured, when executed by a processor, to cause an apparatus at least to perform the following: receive, from a user device, a sounding reference signal, SRS; perform a channel estimation based on the received SRS signal, wherein at least one SRS-based channel vector is discarded based on an optimum rank for downlink transmission being lower than a number of ports of the user device; transmit, to the user device, a beamformed channel state information reference signal, CSI-RS; receive, from the user device, a precoding matrix indicator, PMI, calculated based on the beamformed CSI-RS; calculate channel state information, CSI, based on the PMI and beamforming of the CSI-RS; and determine a linear precoding matrix based on combined information from the channel estimation and the CSI, wherein the information from the PMI-based CSI is used to compensate for the one or more discarded SRS-based channel vectors of the channel estimation. The computer program may further comprise instructions for causing the apparatus to perform any example embodiment of the method of the second aspect.

According to a fourth aspect, an apparatus may comprise means for receiving, from a user device, a sounding reference signal, SRS; means for performing a channel estimation based on the received SRS signal, wherein at least one SRS-based channel vector is discarded based on an optimum rank for downlink transmission being lower than a number of ports of the user device; means for transmitting, to the user device, a beamformed channel state information reference signal, CSI-RS; means for receiving, from the user device, a precoding matrix indicator, PMI, calculated based on the beamformed CSI-RS; means for calculating channel state information, CSI, based on the PMI and beamforming of the CSI-RS; and means for determining a linear precoding matrix based on combined information from the channel estimation and the CSI, wherein the information from the PMI-based CSI is used to compensate for the one or more discarded SRS-based channel vectors of the channel estimation. The apparatus may further comprise means for performing any example embodiment of the method of the second aspect.

Many of the attendant features will be more readily appreciated as they become better understood by reference to the following detailed description considered in connection with the accompanying drawings.

## DESCRIPTION OF THE DRAWINGS

The accompanying drawings, which are included to provide a further understanding of the example embodiments and constitute a part of this specification, illustrate example embodiments and together with the description help to explain the example embodiments. In the drawings:

FIG. 1 illustrates an example of a signaling procedure for obtaining channel state information based on a sounding reference signal;
FIG. 2 illustrates an example of a signaling procedure for obtaining channel state information based on a precoding matrix indicator feedback;
FIG. 3 illustrates an example of completeness and accuracy of data obtained from SRS based channel and PMI feedback according to an example embodiment;
FIG. 4 illustrates an example of a flowchart for PMI-aided linear precoding according to an example embodiment;
FIG. 5 illustrates an example of an apparatus configured to practice one or more example embodiments; and
FIG. 6 illustrates an example of a method for PMI-aided linear precoding according to an example embodiment.
Like references may be used to designate like parts in the accompanying drawings.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of operations for constructing and operating the example. However, the same or equivalent functions and sequences may be accomplished by different examples.

Due to a rapid development of wireless communication technologies, there is a substantial growth in the number of user equipment (UE) and a high demand on quality of services, such as high downlink data rates. However, the available spectrum bands in the current wireless communication system are limited. To improve spectrum efficiency, terminals and base station may be equipped with multiple antennas. Massive MIMO is one of key technologies for the $5^{th}$ and further generation wireless communications, where a gNodeB (gNB) may be equipped with hundreds of antennas and can simultaneously serve tens of users at the same time-frequency resource. Typically, the number of antennas at the gNB and the UE are 64 and 4, respectively, in current commercial 5G networks.

Thus, multiple data streams precoding schemes can be used at the gNB to take full advantage of massive MIMO systems and increase spatial multiplexing gain. Data streams may be formed by multiple layers of signals which can be transmitted in parallel over a wireless channel. Each layer may represent an independent data stream. In the following, the term "layer" may also refer to "data stream". To avoid interference between layers, the number of layers for a single user may be limited by a rank of downlink wireless channel. An optimum rank may be obtained based on UE feedback or calculated by the gNB aiming at spectrum efficiency maximization.

A preferable case for downlink transmission is with full rank where the optimum rank of downlink transmission is the number of UE antennas/ports. Thus, the spatial multiplexing can be fully used. Precoding schemes for full-rank scenarios comprise, for example, zero-forcing (ZF) precoding, singular value decomposition (SVD) and linear minimum mean squared error (LMMSE) precoding based on sounding reference signal (SRS). However, in most scenarios, the optimum rank is lower than the number of UE antennas/ports, i.e., rank-deficient.

In rank-deficient scenarios, when SRS-based SVD precoding is used, L eigenvectors corresponding to the L largest eigenvalue may be chosen as precoding vectors. However, SVD is computationally complex. Further, SVD can cause delay for downlink transmission, especially when sub-band size is small and precoding matrices need to be updated frequently.

When LMMSE precoding is used in rank-deficient scenarios, the gNB may need to discard some SRS channel or precoding vectors to make the number of precoding vectors identical with the number of the required rank. However, discarding channel or precoding vectors may cause serious channel information loss and system performance degradation.

An objective is to provide a precoding technique with reduced computational complexity for rank-deficient scenarios for downlink transmissions. According to an example embodiment, precoding matrices design for arbitrary rank-L supported by a network device, such as gNB, is provided. The designed precoding matrices may be robust against the rank-deficient channels.

An example embodiment provides a low-complexity linear precoding method for massive MIMO systems with arbitrary rank-L downlink transmission, where L<$N_r$, and $N_r$ is the number of UE ports. A PMI reported from the UE may be used for precoding design, wherein information obtained based on the reported PMI is combined with SRS channel for rank-deficient scenarios. Thus, $N_r$-L SRS channel vectors discarded due to low rank transmission can be compensated by the PMI. The precoding design is referred to PMI-aided linear precoding (PALP).

According to an example embodiment, an optimization problem for the PALP is formulated with the usage of PMI-based channel state information (CSI) and SRS channel, aiming at minimizing the mean squared error at UE and minimizing orthogonal projection from the proposed precoding to the null space of PMI-based CSI. Further, a closed-form expression for PALP is obtained.

The PMI-aided linear precoding method may be compatible with current communication systems and may not require new signaling. The PMI-aided linear precoding method can improve throughput performance in rank-deficient scenarios.

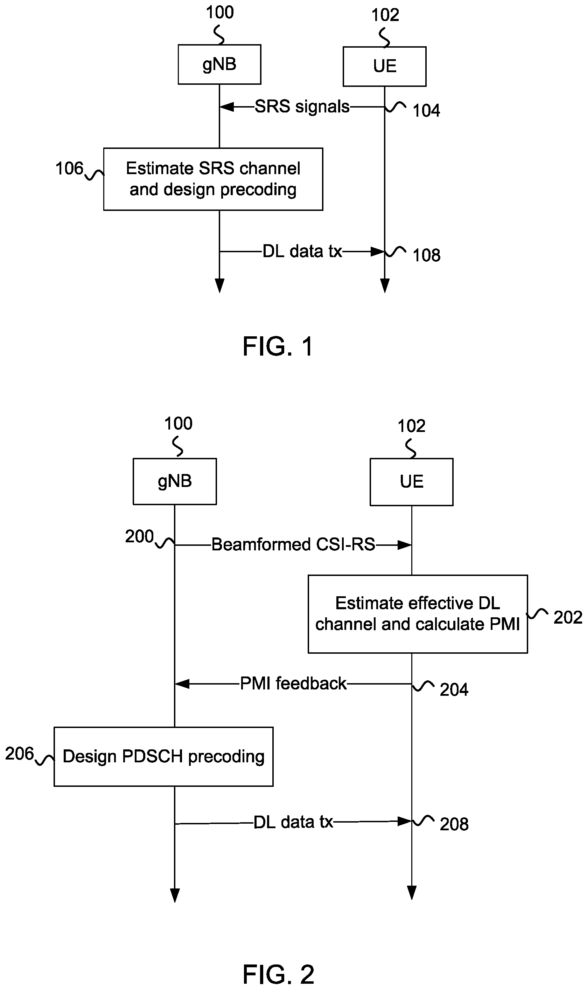

In time-division duplexing (TDD) massive MIMO systems, precoding matrices may be dynamically designed based on channel state information. The channel state information may be obtained by the gNB. The performance of massive MIMO systems may highly depend on the accuracy of CSI. Two example procedures for a gNB in massive MIMO systems to obtain CSI are listed below. A first procedure is for sounding reference signal (SRS) based CSI/channel. The procedure of signal transmission between a UE and the gNB for the SRS based CSI is illustrated in FIG. 1.

In case of the SRS-based channel, the UE 102 may send uplink an SRS signal 104 periodically or aperiodically. The SRS signal may comprise a predefined signal sent at a specific time and frequency. The gNB 100 may estimate uplink SRS channel and acquire downlink CSI $\mathbf{H}_{Dl}$ via channel reciprocity at 106. The gNB 100 may design precoding, wherein a

precoding matrix $\mathbf{W}_{PDSCH} = f(\mathbf{H}_{Dl})$) is used for downlink data transmission at 108 and f() denotes a precoding function.

The procedure of signal transmission between the UE 102 and the gNB 100 for the PMI based CSI is illustrated in FIG. 2.

In case of the PMI-based CSI, a two-stage CSI acquisition via UE feedback may be performed. In the first stage, at 200, the gNB 100 may send P-port channel state information reference signal (CSI-RS) to the UE with static beams or a beamformer based on long-term statistical CSI. P refers to the number of ports at the gNB 100, which is less than the number of gNB antennas. For example, the gNB 100 may send CSI-RS beamformed by $\mathbf{W}_{CSI\text{-}RS}$. Then, at 202, the UE 102 may estimate downlink effective CSI $\mathbf{H}_{DL,eff} = \mathbf{H}_{Dl}\mathbf{W}_{CSI\text{-}RS}$ based on the CSI-RS and calculate downlink CSI based on pre-defined codebooks, for example. A DL CSI determined by the UE 102 may include at least one of PMI, channel quality indicator (CQI) and/or rank indicator (RI). Thereafter, at 204, the UE 102 may send the CSI measurement (PMI, CQI and/or RI) to the gNB 100 as feedback. The PMI may indicate a precoding matrix $\mathbf{V}_{pmi} = Q(\mathbf{H}_{DL,eff})$, where Q () denotes a quantization function. The feedback may be sent periodically by the UE 102. By combining the CSI-RS beamformer and the PMI, the gNB 100 can recover and design PDSCH (physical downlink shared channel) precoding matrices at 206 for downlink data transmission $\mathbf{W}_{PDSCH} = \mathbf{W}_{CSI\text{-}RS}\mathbf{V}_{pmi}$ at 208.

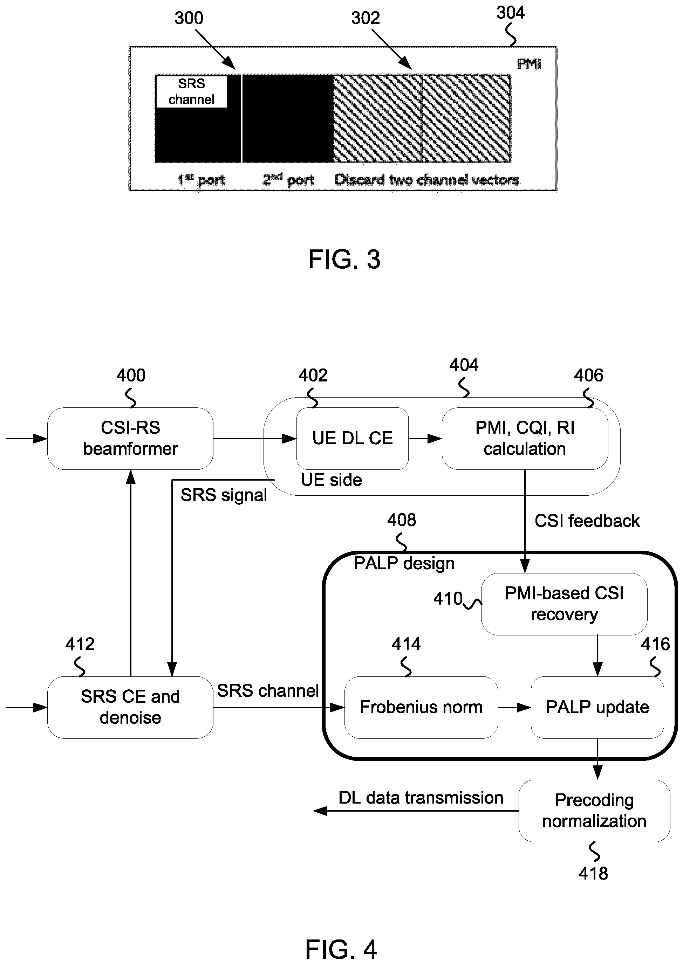

An example of completeness and accuracy of data obtained based on the SRS channel and the PMI-based channel is illustrated in FIG. 3.

As described, the PMI may be calculated based on effective downlink CSI estimated at UE and codebooks. The dimension of the effective downlink CSI may be lower than downlink radio channel and limited by the number of ports at the gNB due to the beamformed CSI-RS. Channel dimension reduction and quantization error caused by codebooks may limit the accuracy of PMI. Different from the radio channel, the PMI may indicate the spatial properties of the effective downlink channel and work as a precoding matrix with the rank calculated by the UE. Therefore, when rank (indicated by the RI) is less than the number of UE antennas, i.e., in rank-deficient scenarios, the precoding matrix indicated by the PMI contains CSI from all the channel vectors. On the other hand, SRS-based precoding design may discard some channel vectors.

Hence, the SRS channel/CSI 300 may be more accurate, but some channel vectors 302 are discarded for rank deficient users. PMI-based channel/CSI 304 can be less accurate for channel estimation but contains relatively complete CSI. Therefore, to compensate channel losses resulting from the discard of SRS channel vectors, it may be beneficial to use PMI feedback from UE for downlink precoding design especially in rank-deficient scenarios.

FIG. 4 illustrates an example of a flowchart for the PMI-aided linear precoding according to an example embodiment. To avoid the high computational complexity of SVD precoding and channel loss of SRS-based precoding in rank-deficient scenarios, a precoding method with the assist of PMI is used. The method described herein is for single user precoding design, which can be easily used for multiple users.

The method described herein may be used, for example, in a wideband system with K sub-bands. A gNB may be equipped with $N_t$ antennas serving one UE equipped with $N_r$ antennas and ports. The downlink channel for the k-th sub-band precoding can be noted as $\mathbf{H}_{dl,k} \in C^{Nr \times Nt}$. A sub-band SRS channel can be obtained by combining all subcarrier channels within the sub-band. A received signal in the k-th sub-band at the UE can be modelled as

$$\mathbf{y}_k = \mathbf{H}_{dl,k}\mathbf{W}_k\mathbf{s}_k + \mathbf{n}$$

where $\mathbf{W}_k \in C^{Nt \times L}$ is precoding matrix for the k-th sub-band, $\mathbf{s}_k \in C^{L \times 1}$ is transmit signal vector in the k-th sub-band with a unit power constraint $E\left\{\left\|\mathbf{s}_k\mathbf{s}_k^H\right\|^2\right\} = \mathbf{I}$, the vector $\mathbf{n} \in C^{L \times 1}$ is complex-valued addictive white Gaussian noise, whose entries are independent and identically distributed with zero mean and unit variance and L is number of layers with an optimum rank for downlink data transmission.

The gNB can obtain PMI-based CSI via a two-stage method, similar to the signaling procedure of FIG. 2. Downlink channel estimation and calculation of PMI, CQI and/or RI are performed at the UE side 404. In the first stage, at 400, the gNB may be configured to send beamformed CSI-RS to the UE. At 402, the UE may be configured to perform effective downlink CSI estimation based on the beamformed CSI-RS. The gNB may use $N_p$ ports for the CSI-RS transmission. $\mathbf{W}_{csi\text{-}rs} \in C^{Nt \times Np}$ matrix may be used as the beamformer for the CSI-RS. Then, the downlink effective channel on the k-th sub-band estimated at the UE may be given by

$$\mathbf{H}_{dl,eff,k} = \mathbf{H}_{dl,k}\mathbf{W}_{csi-rs} \in C^{N_r \times N_p}$$

where $\mathbf{H}_{dl,eff,k} \in C^{Nr \times Np}$. Then, at 406, the UE may calculate PMI based on $\mathbf{H}_{dl,eff,k}$ and codebooks. The UE may be further configured to determine CQI and/or RI. The UE may be configured to send CSI feedback to the gNB, the CSI feedback comprising the calculated PMI. In the second stage, at 410, PMI-based CSI is calculated by the gNB according to the CSI feedback from the UE and the beamformer $\mathbf{W}_{csi\text{-}rs}$. The gNB may be configured to recover a PMI matrix $\mathbf{V}_{pmi,k} \in C^{Np \times L}$

based on the PMI reported by the UE and calculate the PMI-based CSI as

$$\mathbf{W}_{pmi,k} = \mathbf{V}_{pmi,k}^H \mathbf{W}_{csi-rs}^\dagger$$

$$\mathbf{W}_{csi-rs}^\dagger = \left( \mathbf{W}_{csi-rs}^H \mathbf{W}_{csi-rs} \right)^{-1} \mathbf{W}_{csi-rs}^H$$

where $\mathbf{W}_{pmi,k} \in C^{L \times Nt}$,

The CSI feedback with PMI sent by the UE may be indicated by a radio resource control (RRC) reconfiguration message. The PMI feedback may be provided for wideband and/or sub-band. When wideband PMI is used, $\mathbf{V}_{pmi,k}$, k=1...K may be identical for all sub-bands.

At 412, the gNB may be configured to perform channel estimation based on an SRS signal received from the UE. The gNB may be also configured to perform denoising. The gNB may be further configured to compute beam weighting factors for the beamformer at 400 based on the channel estimation. Alternatively, the gNB may be configured to use some other beamforming technique, such as to use static beams at 400. In rank-deficient scenarios, the gNB may be configured to perform port selection and reduce dimension of the SRS channel. The dimension reduction may refer to discarding one or more channel vectors of the SRS channel. The SRS channel with reduced dimension after port selection is denoted as $\mathbf{H}_{dl,r,k} \in C^{L \times N_t}$. The gNB may be then configured to use the PMI-based CSI to compensate the information loss of the SRS-channel with the one or more discarded channel vectors by using the PMI-aided linear precoding as the precoding scheme.

After reception of PMI and performing SRS based channel estimation, the gNB may be configured to design the PALP matrix at 408. The PALP may be configured to minimize a summation of mean square error (MSE) at UE and orthogonal projection from the proposed precoding ($\mathbf{W}_k$) to PMI-based CSI $\mathbf{W}_{pmi,k}$. Then, the precoding matrix for the k-th sub-band $\mathbf{W}_k$ may be formulated as

$$\min_{\mathbf{W}_k} \mathrm{E} \left\{ \left\| \mathbf{H}_{dl,r,k} \mathbf{W}_k \mathbf{s}_k + \mathbf{n} - \mathbf{s}_k \right\|^2 \right\} + \left\| \mathbf{P}_{\perp,k} \mathbf{W}_k \right\|^2$$

$$s.t. \, \mathrm{Tr}( \mathbf{W}_k^H \mathbf{W}_k) \leq P$$

$$\mathbf{P}_{\perp,k} = \mathbf{I}_{N_t} - \mathbf{W}_{pmi,k}^H * \left( \mathbf{W}_{pmi,k} * \mathbf{W}_{pmi,k}^H \right)^{-1} \mathbf{W}_{pmi,k}$$

where P is the total power and the constraint is total power control. $\mathbf{I}_{N_t}$ denotes an identity matrix. The orthogonal projector, i.e., orthogonal projection matrix $\mathbf{P}_{\perp,k}$, may be determined by the CSI $\mathbf{W}_{pmi,k}$.

The optimization problem for PALP can be solved by Lagrangian function, which may be given as

$$L(\mathbf{W}_k, \lambda)$$

$$= \mathrm{E} \left\{ \left\| \mathbf{H}_{dl,r,k} \mathbf{W}_k \mathbf{s}_k + \mathbf{n} - \mathbf{s}_k \right\|^2 \right\} + \left\| \mathbf{P}_{\perp,k} \mathbf{W}_k \right\|^2 + \lambda(\mathrm{Tr}( \mathbf{W}_k^H \mathbf{W}_k) - P)$$

$$= \mathrm{E} \left\{ (\mathbf{H}_{dl,r,k} \mathbf{W}_k \mathbf{s}_k + \mathbf{n} - \mathbf{s}_k)^H (\mathbf{H}_{dl,r,k} \mathbf{W}_k \mathbf{s}_k + \mathbf{n} - \mathbf{s}_k) \right\} + \left\| \mathbf{P}_{\perp,k} \mathbf{W}_k \right\|^2 + \lambda(\mathrm{Tr}( \mathbf{W}_k^H \mathbf{W}_k) - P)$$

$$= \mathrm{Tr}(\mathbf{W}_k^H \mathbf{H}_{dl,r,k}^H \mathbf{H}_{dl,r,k} \mathbf{W}_k) - \mathrm{Tr}(\mathbf{W}_k^H \mathbf{H}_{dl,r,k}^H) - \mathrm{Tr}(\mathbf{H}_{dl,r,k} \mathbf{W}_k) + L + \sigma^2 N_r$$

$$+ \mathrm{Tr}(\mathbf{W}_k^H \mathbf{P}_{\perp,k}^H \mathbf{P}_{\perp,k} \mathbf{W}_k) + \lambda(\mathrm{Tr}( \mathbf{W}_k^H \mathbf{W}_k) - P)$$

where $\lambda$ is a scalar corresponding to the Lagrange multiplier.

Minimizing $L(\mathbf{W}_k, \lambda)$ by taking its gradient with respect to $\mathbf{W}_k$, the closed-form expression for PALP can be obtained as

$$\frac{\partial L(\mathbf{W}_k, \lambda)}{\partial \mathbf{W}_k} = 0$$

$$(\mathbf{H}_{dl,r,k}^H \mathbf{H}_{dl,r,k} + \mathbf{P}_{\perp,k}^H \mathbf{P}_{\perp,k} + \lambda \mathbf{I}_{N_t}) \mathbf{W}_k = \mathbf{H}_{dl,r,k}^H$$

$$\mathbf{W}_k = (\mathbf{H}_{dl,r,k}^H \mathbf{H}_{dl,r,k} + \mathbf{P}_{\perp,k}^H \mathbf{P}_{\perp,k} + \lambda \mathbf{I}_{N_t})^{-1} \mathbf{H}_{dl,r,k}^H.$$

In practice, normalization may need to be conducted to $\mathbf{H}_{dl,r,k}$. The gNB may be configured to perform the normalization of the SRS channel at 414, for example, based on a Frobenius norm. The Frobenius norm of $\mathbf{H}_{dl,r,k}$ may be denoted as $F_{H,dl,r,k}$, $k = 1, \ldots , K$ and the normalized SRS channel can be given by $\overline{\mathbf{H}}_{dl,r,k} = \dfrac{\mathbf{H}_{dl,r,k}}{F_{H,dl,r,k}}$ . Further, the regularization term $\lambda$ may need to be normalized as $\bar{\lambda} = \dfrac{\lambda}{F_{H,dl,r}^2}$ , where $F_{H,dl,r} = \dfrac{1}{K} \sum_{k=1}^{K} F_{H,dl,r,k}$ . The determination of regularization term $\lambda$ is well known and therefore not described this disclosure.

Finally, the PALP precoding matrix $\overline{\mathbf{W}}_k$ may be given as

$$\overline{\mathbf{W}}_k = (\overline{\mathbf{H}}_{dl,r,k}^H \overline{\mathbf{H}}_{dl,r,k} + \mathbf{P}_{\perp,k}^H \mathbf{P}_{\perp,k} + \bar{\lambda} \mathbf{I}_{N_t})^{-1} \overline{\mathbf{H}}_{dl,r,k}^H.$$

The gNB may then use the PALP precoding matrix for DL data transmission to the UE. At 418, the gNB may be configured to perform precoding normalization before the DL transmission. When PALP is implemented by the gNB, the gNB may be configured to update the PALP at 416 when triggered by an update of CSI feedback or SRS channel update.

The PALP may be compatible with existing signal processing procedures. For example, the gNB may use the procedures describes in FIG. 1 and FIG. 2 to obtain SRS based CSI and PMI-based CSI, and design the precoding matrix based on information obtained from both of the CSIs. The PALP may not require any new signaling transmission. With the PALP method, the channel loss of discarded SRS channel vectors can be compensated, and system throughput performance can be improved.

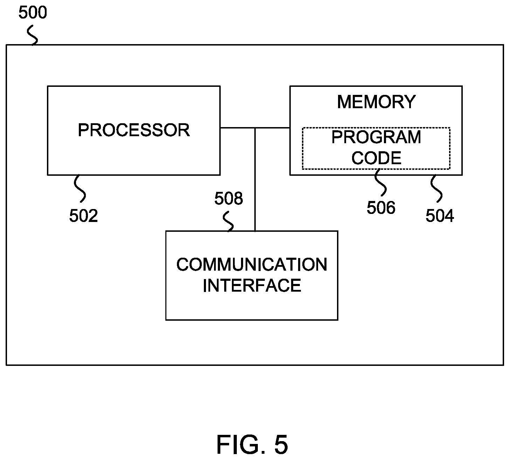

FIG. 5 illustrates an example of an apparatus 500 configured to practice one or more example embodiments. The apparatus 500 may comprise for example a computing device such as for example a base station, a network node, a network device, a server device, or the like. In an embodiment, the apparatus 500 comprises a gNB. Although the apparatus 500 is illustrated as a single device it is appreciated that, wherever applicable, functions of apparatus 500 may be distributed to a plurality of devices.

The apparatus 500 may comprise at least one processor 502. The at least one processor 502 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 500 may further comprise at least one memory 504. The at least one memory 504 may be configured to store, for example, computer program code 506 or the like, for example operating system software and application software. The at least one memory 504 may comprise one or more volatile memory devices, one or more non-volatile memory devices, and/or a combination thereof. For example, the at least one memory 504 may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 500 may further comprise one or more communication interfaces 508 configured to enable the apparatus 500 to transmit to other apparatuses, such as UEs. A UE may be also referred to as a user node, a client node or a user device. The one or more communication interfaces 508 can be further configured to enable the apparatus 500 to receive information from other apparatuses, such as the UEs. The communication interface 508 may be configured to provide at least one wireless radio connection, such as for example a 3GPP mobile broadband connection (e.g., 3G, 4G, 5G, or beyond). However, the communication interface 508 may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. The communication interface 508 may comprise, or be configured to be coupled to, at least one antenna to transmit and/or receive radio frequency signals. One or more of the various types of connections may be also implemented as separate communication interfaces, which may be coupled or configured to be coupled to a plurality of antennas.

The apparatus 500 may further comprise other components or functionalities, such as a user interface comprising an input device and/or an output device. The input device may take various forms such a keyboard, a touch screen, or one or more embedded control buttons. The output device may for example comprise a display, a speaker, a vibration motor, or the like.

When the apparatus 500 is configured to implement some functionality, some component and/or components of the apparatus 500, such as for example the at least one processor 502 and/or the memory 504, may be configured to implement this functionality. Furthermore, when the at least one processor 502 is configured to implement some functionality, this functionality may be implemented using program code 506 comprised, for example, in the memory 504.

The apparatus 500 may be configured to receive a sounding reference signal from a user device, and perform a channel estimation based on the received SRS signal. In case of a rank deficient scenario, wherein an optimum rank for downlink transmission is lower than a number of ports of the user device, the apparatus 500 is configured to discard at least one channel vector of the SRS channel.

The apparatus 500 is further configured to transmit, to the user device, a beamformed channel state information reference signal. Thereafter, apparatus 500 is configured to receive, from the user device, a precoding matrix indicator calculated by the user device based on the beamformed CSI-RS. Based on the received PMI and the beamformer of the CSI-RS, the apparatus 500 is configured to calculate PMI-based CSI.

The apparatus 500 is further configured to design and calculate a linear precoding matrix based on combined information from the channel estimation and the PMI-based CSI. Hence, information obtained from the PMI-based CSI can be used by the apparatus 500 to compensate for the information loss of the SRS channel with reduced dimension.

The functionality described herein may be performed, at least in part, by one or more computer program product components such as software components. According to an embodiment, the apparatus 500 comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 500 comprises means for performing at least one method described herein. In one example, the means comprises the at least one processor 502, the at least one memory 504 including instructions (e.g., the program code 506) configured to, when executed by the at least one processor 502, cause the apparatus 500 to perform the method.

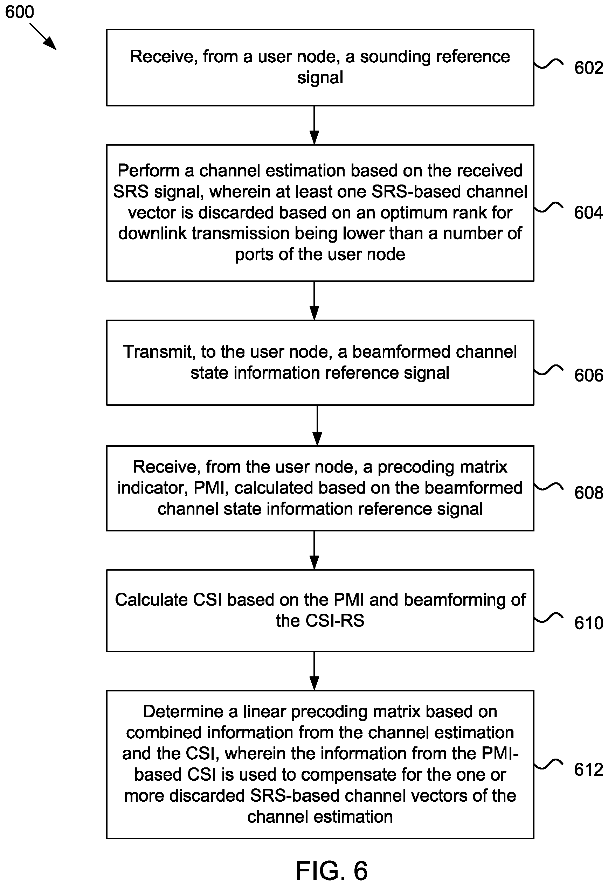

FIG. 6 illustrates an example of a method 600 for designing a precoding matrix in rank-deficient scenarios according to an example embodiment. The method may be performed, for example, by a network device such as a gNB.

At 602, the method may comprise receiving, from a user device, a sounding reference signal.

At 604, the method may comprise performing a channel estimation based on the received SRS signal, wherein at least one SRS channel vector is discarded based on an optimum rank for downlink transmission being lower than a number of ports of the user device.

At 606, the method may comprise transmitting, to the user device, a beamformed channel state information reference signal.

At 608, the method may comprise receiving, from the user device, a precoding matrix indicator, PMI, calculated based on the beamformed CSI-RS.

At 610, the method may comprise calculating channel state information based on the PMI and beamforming of CSI-RS.

At 612, the method may comprise determining a linear precoding matrix based on the channel estimation based on the SRS signal and the PMI based CSI. The linear precoding matrix may be designed by combining information from the channel estimation and the CSI such that the information from the CSI is used to compensate for the one or more discarded SRS channel vectors of the channel estimation.

Further features of the methods directly result from the functionalities and parameters of the apparatuses, as described in the appended claims and throughout the specification and are therefore not repeated here. It is noted that one or more operations of the method may be performed in different order.

An apparatus, for example a network device, may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at one memory and the program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

**Claims**

1. A network device (500), comprising:

   at least one processor (502); and
   at least one memory (504) including instructions which, when executed by the at least one processor (502), cause the network device (500) at least to:

   receive, from a user device, a sounding reference signal, SRS;
   perform a channel estimation based on the received SRS signal, wherein at least one SRS-based channel vector is discarded based on an optimum rank for downlink transmission being lower than a number of ports of the user device;
   transmit, to the user device, a beamformed channel state information reference signal, CSI-RS;
   receive, from the user device, a precoding matrix indicator, PMI, calculated based on the beamformed CSI-RS;
   calculate channel state information, CSI, based on the PMI and beamforming of the CSI-RS; and
   determine a linear precoding matrix based on combined information from the channel estimation and the CSI, wherein the information from the CSI is used to compensate for the one or more discarded SRS-based channel vectors of the channel estimation.

2. The network device (500) of claim 1, wherein the at least one memory (504) comprises instructions which, when executed by the at least one processor (502), cause the network device (500) to:

   construct an optimization problem of minimizing a summation of a mean square error based on the channel estimation and an orthogonal projection from the precoding matrix onto the null space of the CSI; and
   solve the optimization problem to obtain the precoding matrix.

3. The network device (500) of claim 2, wherein an orthogonal projector for the orthogonal projection is determined based on the CSI.

4. The network device (500) of claim 2 or 3, wherein the optimization problem is solved by a Lagrangian function.

5. The network device (500) of claim 4, wherein the at least one memory (504) comprises instructions which, when executed by the at least one processor (502), cause the network device (500) to:
   derive a closed-form expression of the precoding matrix by taking a gradient of the Lagrangian function with respect to the precoding matrix.

6. The network device (500) of claim 4 or 5, wherein the at least one memory (504) further comprises instructions which, when executed by the at least one processor (502), cause the network device (500) to:
   perform normalization of at least one of the channel estimation or a Lagrangian multiplier of the Lagrangian function.

7. The network device (500) of claim 6, wherein the normalization is performed with a Frobenius norm.

8. The network device (500) of any preceding claim, wherein the at least one memory (504) comprises instructions which, when executed by the at least one processor (502), cause the network device (500) to:
   update the precoding matrix in response to at least one of an updated PMI or updated channel estimation.

9. A method (600) carried out by a network device (500), comprising:

   receiving (602), from a user device, a sounding reference signal, SRS;
   performing (604) a channel estimation based on the received SRS signal, wherein at least one SRS channel vector is discarded based on an optimum rank for downlink transmission being lower than a number of ports of the user device;
   transmitting (606), to the user device, a beamformed channel state information reference signal, CSI-RS;
   receiving (608), from the user device, a precoding matrix indicator, PMI, calculated based on the beamformed CSI-RS;
   calculating (610) channel state information, CSI, based on the PMI and beamforming of the CSI-RS; and
   determining (612) a linear precoding matrix based on combined information from the channel estimation and the CSI, wherein the information from the CSI is used to compensate for the one or more discarded SRS channel vectors of the channel estimation.

10. The method (600) of claim 9, comprising:

    constructing an optimization problem of minimizing a summation of a mean square error based on the channel estimation and an orthogonal projection from the precoding matrix onto the null space of the CSI; and
    solving the optimization problem to obtain the precoding matrix.

11. The method (600) of claim 10, wherein the optimization problem is solved by a Lagrangian function.

12. The method (600) of claim 11, comprising:
    deriving a closed-form expression of the precoding matrix by taking a gradient of the Lagrangian function with respect to the precoding matrix.

13. The method (600) of claim any of claims 9 to 12, comprising:
    performing normalization of at least one of the channel estimate or a Lagrangian multiplier of the Lagrangian function.

14. The method (600) of claim 13, wherein the normalization is performed with a Frobenius norm.

15. The method (600) of any of claims 9 to 14, comprising:
    updating the precoding matrix in response to at least one of an updated PMI or updated channel estimation.

100

gNB

102

UE

←———SRS signals———⟳ 104

106 ⟳ | Estimate SRS channel
and design precoding |

|———DL data tx———→⟳ 108

## FIG. 1

100

gNB

102

UE

200 ⟳ |———Beamformed CSI-RS———→

| Estimate effective DL
channel and calculate PMI | ⟳ 202

←———PMI feedback———⟳ 204

206 ⟳ | Design PDSCH precoding |

|———DL data tx———→⟳ 208

## FIG. 2

FIG. 3

FIG. 4

500

PROCESSOR

502

MEMORY

PROGRAM
CODE

506          504

508

COMMUNICATION
INTERFACE

FIG. 5

600

Receive, from a user node, a sounding reference signal — 602

Perform a channel estimation based on the received SRS signal, wherein at least one SRS-based channel vector is discarded based on an optimum rank for downlink transmission being lower than a number of ports of the user node — 604

Transmit, to the user node, a beamformed channel state information reference signal — 606

Receive, from the user node, a precoding matrix indicator, PMI, calculated based on the beamformed channel state information reference signal — 608

Calculate CSI based on the PMI and beamforming of the CSI-RS — 610

Determine a linear precoding matrix based on combined information from the channel estimation and the CSI, wherein the information from the PMI-based CSI is used to compensate for the one or more discarded SRS-based channel vectors of the channel estimation — 612

FIG. 6

EUROPEAN SEARCH REPORT

**Application Number**

EP 24 21 5299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/029684 A1 (CHENG HONGBING [US] ET AL) 27 January 2022 (2022-01-27) * abstract * * paragraph [0040] - paragraph [0058] * * figures 1-4 * | 1-15 | INV. H04B7/0456 |
| X | WO 2021/016023 A1 (GOOGLE LLC [US]) 28 January 2021 (2021-01-28) * abstract * * paragraph [0033] - paragraph [0081] * * figures 1A-4B * | 1-15 | |
| A | US 2020/252111 A1 (MAAMARI DIANA [US] ET AL) 6 August 2020 (2020-08-06) * paragraph [0150] - paragraph [0157] * | 1-15 | |
| A | US 2014/177745 A1 (KRISHNAMURTHY SANDEEP H [US] ET AL) 26 June 2014 (2014-06-26) * paragraph [0055] * | 1-15 | |
| A | JIN HUANGPING ET AL: "Massive MIMO Evolution Toward 3GPP Release 18", IEEE JOURNAL ON SELECTED AREAS IN COMMUNICATIONS, IEEE SERVICE CENTER, PISCATAWAY, US, vol. 41, no. 6, 5 May 2023 (2023-05-05), pages 1635-1654, XP011943560, ISSN: 0733-8716, DOI: 10.1109/JSAC.2023.3273768 [retrieved on 2023-05-08] * abstract * | 1-15 | TECHNICAL FIELDS SEARCHED (IPC) H04B |

The present search report has been drawn up for all claims

| Place of search | Date of completion of the search | Examiner |
|---|---|---|
| Munich | 23 April 2025 | Garrammone, Giuliano |

## ANNEX TO THE EUROPEAN SEARCH REPORT
## ON EUROPEAN PATENT APPLICATION NO.

EP 24 21 5299

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | | Publication date | Patent family member(s) | | Publication date |
|---|---|---|---|---|---|
| US 2022029684 | A1 | 27-01-2022 | CN | 113972941 A | 25-01-2022 |
| | | | DE | 102021113535 A1 | 27-01-2022 |
| | | | KR | 20220012813 A | 04-02-2022 |
| | | | TW | 202205825 A | 01-02-2022 |
| | | | US | 2022029684 A1 | 27-01-2022 |
| | | | US | 2022209839 A1 | 30-06-2022 |
| WO 2021016023 | A1 | 28-01-2021 | CN | 114342276 A | 12-04-2022 |
| | | | EP | 4000186 A1 | 25-05-2022 |
| | | | US | 2022278796 A1 | 01-09-2022 |
| | | | WO | 2021016023 A1 | 28-01-2021 |
| US 2020252111 | A1 | 06-08-2020 | CN | 112136281 A | 25-12-2020 |
| | | | EP | 3815253 A1 | 05-05-2021 |
| | | | US | 2019356364 A1 | 21-11-2019 |
| | | | US | 2020252111 A1 | 06-08-2020 |
| | | | WO | 2019218967 A1 | 21-11-2019 |
| US 2014177745 | A1 | 26-06-2014 | CN | 105264787 A | 20-01-2016 |
| | | | EP | 2936701 A1 | 28-10-2015 |
| | | | KR | 20150097774 A | 26-08-2015 |
| | | | US | 2014177745 A1 | 26-06-2014 |
| | | | WO | 2014099341 A1 | 26-06-2014 |

EPO FORM P0459

For more details about this annex : see Official Journal of the European Patent Office, No. 12/82